(19) **Europäisches Patentamt / European Patent Office / Office européen des brevets**

(11) **EP 3 425 948 B1**

(12) **EUROPEAN PATENT SPECIFICATION**

(45) Date of publication and mention of the grant of the patent:
**25.05.2022 Bulletin 2022/21**

(21) Application number: **18187471.0**

(22) Date of filing: **26.08.2015**

(51) International Patent Classification (IPC):
**H04W 16/14** *(2009.01)* **H04W 72/08** *(2009.01)*
**H04W 24/02** *(2009.01)*

(52) Cooperative Patent Classification (CPC):
**H04W 16/14; H04W 72/082;** H04W 24/02

(54) **RADIO RESOURCE MANAGEMENT SYSTEM**

FUNKRESSOURCENVERWALTUNGSSYSTEM

SYSTÈME DE GESTION DE RESSOURCES RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2014 CN 201410484525**

(43) Date of publication of application:
**09.01.2019 Bulletin 2019/02**

(62) Document number(s) of the earlier application(s) in accordance with Art. 76 EPC:
**15182568.4 / 2 999 254**

(73) Proprietor: **Sony Group Corporation**
**Tokyo 108-0075 (JP)**

(72) Inventors:
• **ZHAO, Youping**
  **Beijing 100044 (CN)**
• **SUN, Chen**
  **Beijing 100190 (CN)**
• **HU, Yiqi**
  **Beijing 100044 (CN)**
• **GUO, Xin**
  **Beijing 100190 (CN)**

(74) Representative: **D Young & Co LLP**
**120 Holborn**
**London EC1N 2DY (GB)**

(56) References cited:
**US-A1- 2013 102 350**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 425 948 B1

**Description**

The present disclosure relates generally but not exclusively to management of radio resource in wireless communication, and more particularly, to a radio resource management system.

With the development of wireless communication technology, radio resources are increasingly insufficient. To take full advantage of limited radio resources, for example, the radio resources that have been allocated to certain services but have not been fully utilized can be dynamically utilized. More specifically, with respect to the primary system having right to use radio resources, the radio resources that have not been fully utilized by the primary system is allocated to unauthorized secondary systems without affecting usage by the primary system, such that the secondary systems appropriately utilize the authorized radio resources of the primary system without affecting radio resource usage by the primary system.

When a new secondary system expects to access spectrum resource (that is, has a request for spectrum resource), a problem to be solved urgently is how to allocate spectrum resources to the new secondary system (especially, the new secondary system having a QoS requirement) in the case that the interferences of respective secondary systems do not impact the primary system and the interference on the new secondary system is within an allowable range. Furthermore, the secondary system managed by an adjacent radio resource management system also interferes with the spectrum resource usage of the new secondary system, thus when allocating spectrum resources to the new secondary system in the prior art, some problems may be brought about if the interference on the new secondary system by the secondary systems managed by a neighbor radio resource management system is not considered.

A brief summary of the present disclosure is given below, so as to provide a basic understanding on some aspects of the present disclosure. It will be appreciated that the summary is not an exhaustive description of the present disclosure. It is not intended to define a key or important part of the present disclosure, nor is it intended to limit the scope of the present disclosure. It aims to give some concepts in a simplified form, as a preface to the more detailed description described later.

In view of above drawbacks of the prior art, one of the objects of the present disclosure is to provide a radio resource management system and a secondary system for allocating radio spectrum resource to a new secondary system.

A prior art system is described in US2013/0102350A.

According to one embodiment of the present disclosure, there is provided a radio resource management system according to claim 1 and a system according to claim 8.

The radio resource management system according to embodiments of the present disclosure can realize at least one of the following beneficial effects: the spectrum resource can be allocated to a new secondary system more appropriately by communicating the related information of the secondary systems managed by adjacent radio resource management systems therebetween; the new secondary system is determined to be accessed fast and reliably; the modulation mode of the new secondary system and the operating parameters of other secondary systems can be adjusted, so as to guarantee the Qos requirement of the new secondary system.

Through the following detailed description of the best mode of the present disclosure in conjunction with the accompanying drawings, these and other advantages of the present disclosure will become more apparent.

Various respective aspects and features of the invention are defined in the appended claims.

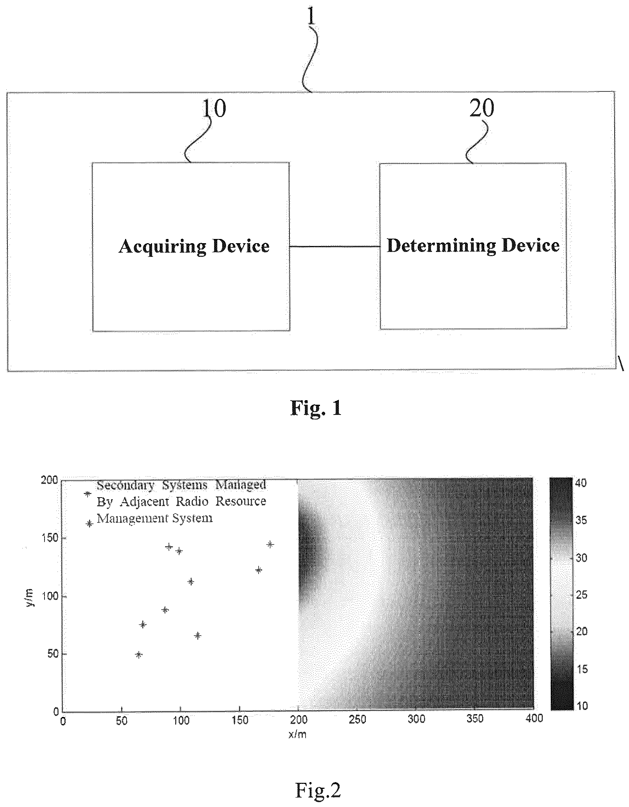

Embodiments of the invention will now be described with reference to the accompanying drawings, throughout which like parts are referred to by like references, and in which:Fig.1 is an exemplary block diagram schematically illustrating a radio resource management system .

Fig.2 is an interference distribution map of respective locations managed by the radio resource management system obtained by MATLAB simulation.

Fig.3 is another exemplary block diagram schematically illustrating a radio resource management system.

Fig.4 is a block diagram schematically illustrating a possible example structure of the determining device shown in Fig.1.

Fig.5 is a block diagram schematically illustrating a possible example structure of the determining device shown in Fig.1.

Fig.6 is another block diagram schematically illustrating a possible example structure of the determining device shown in Fig.1.

Fig.7 is a block diagram schematically illustrating a possible example structure of the operating parameter adjusting unit shown in Fig.6.

Fig.8 is a graph showing the relationship between BER and SINR under 16QAM modulation and QPSK modulation.

Fig.9 is an exemplary block diagram illustrating a radio resource management system according to another embodiment of the present disclosure.

Fig.10 is an exemplary block diagram illustrating a secondary system .

Fig.11 is a diagram illustrating the information interaction between the radio resource management system and the adjacent radio resource management system .

Fig.12 is a diagram illustrating the interference between radio resource management systems and the interference region of respective secondary systems.

Fig.13 is a flow diagram schematically illustrating a radio resource management method .

Fig.14 is a structure diagram showing the hardware configuration of a possible information processing apparatus used to implement the radio resource management system .

Those skilled in the art will appreciate that elements in the figures are illustrated for simplicity and clarity and are not necessarily drawn to scale. For example, the dimensions of some of the elements in the figures may be exaggerated relative to other elements to help to improve understanding of embodiments of the present disclosure.

## Detailed Description of the Invention

The present invention is described below in conjunction with the accompanying drawings. For the sake of clarity and conciseness, not all the features of actual implementations are described in the specification. However, it is to be appreciated that during developing any such actual implementations, numerous implementation-specific decisions must be made to achieve the developer's specific goals, for example, compliance with system-related and business-related constraints which will vary from one implementation to another. Moreover, it is also to be appreciated that such a development effort might be very complex and time-consuming, but will nevertheless be a routine task for those skilled in the art having the benefit of this disclosure.

It is further noted that only device structures and/or process steps closely relevant to the implementation of the present disclosure are illustrated in the drawings while other details less relevant to the present disclosure are omitted so as not to obscure the present disclosure due to those unnecessary details.

The present disclosure provides a radio resource management system and method, a secondary system and a storage system for allocating radio spectrum resources to a new secondary system requesting to access spectrum resource.

Fig.1 is an exemplary block diagram schematically illustrating a radio resource management system .

As shown in Fig.1, the radio resource management system 1 comprises: an acquiring device 10, configured to acquire the interference information of respective locations managed by the radio resource management system 1 according to location information and operating parameters of secondary systems managed by its radio resource management system 1 and the adjacent radio resource management system ; and a determining device 20, configured to determine, determine whether to accept a request from a new secondary system, that is within the management range of the radio resource management system and requests to access spectrum resource, and the spectrum resources available for the new secondary system, based on the interference information acquired by the acquiring device and the location information of the new secondary system, wherein, the radio resource management system 1 manages the secondary system within its management range, such that the secondary systems opportunistically utilize the authorized spectrum resources of a primary system under the premise that the interference of the secondary systems meets a predetermined condition to the primary system .

According to the present disclosure, the radio resource management system 1 and the adjacent radio resource management systems thereof (hereinafter also referred as "the new secondary system's and adjacent radio resource management system") may be a geographical location information database (GLDB) used to manage the information of the communication system (including a primary system and secondary systems) within a specific range, or an advanced locating engine (AGE) covering the communication system within a specific range, or be implemented as a network-side apparatus, such as an eNode B or a baseband cloud, etc. Furthermore, the radio resource management system 1 can be a separate entity independent of the primary system and the secondary systems, or a combination of a plurality of entities distributed on respective primary system and secondary systems.

According to an embodiment of the present disclosure, the primary system managed by the radio resource management system 1 may be a system having the right to use licensed spectrum, and typically includes a primary base station and primary users; correspondingly, the secondary system may be a system having no right to use licensed radio resource, and typically includes a secondary base station and secondary users; according to another embodiment of the present disclosure, the primary system and the secondary system may both have the right to use radio resource, but the priority of spectrum usage of the primary system is higher than that of the secondary system. The concept of primary system and secondary system is well known in the art, and will not be described in detail herein. For example, the primary system managed by the radio resource management system 1 may be a terrestrial television broadcasting system, and the secondary system may be a cognitive radio communication system, such as a wifi communication system operating at television broadcasting band, etc. For another example, the primary system managed by the radio resource management system 1 can be implemented as a WiFi communication system, and the secondary system can be implemented as a cellular communication system operated by using WiFi band.

According to an embodiment of the present disclosure, the secondary system may include a secondary base station and secondary users, or include only the secondary user (for example, in the case that the secondary base station is not provided, and the secondary user is directly managed by the radio resource management system), therefore, in the description of the present disclosure, the secondary user is broadly referred to a secondary system, so as to contain the above condition.

More specifically, the specific implementation of the secondary system according to the present disclosure may be a mobile terminal (such as a smart phone, a tablet personal computer (PC), a notebook PC, a portable game terminal, a portable/dongle type mobile router and a digital imaging device), or a vehicle-mounted terminal (such as a vehicle navigation apparatus), or a terminal performing machine-to-machine (M2M) communication (also known as the machine type communication (MTC) terminal), or a terminal performing device-to-device (D2D) communication.

Furthermore, the secondary system according to an embodiment of the present disclosure may be not only the secondary system entity that is operating currently, but also the secondary system that is expected to operate, such as the secondary system that is in OFF state currently but may be turned on at any time, for example, when the secondary system is a mobile terminal, or it may be a site within the management range of the radio resource management system, for example, the probability that a secondary system moves to the site to operate is relatively high.

The radio resource management system 1 according to the present disclosure manages the secondary systems within its management range, such that the secondary systems opportunistically utilize the authorized spectrum resources of a primary system under the premise that the interference of the secondary systems meets a predetermined condition to the primary system .

According to the present disclosure, opportunistically utilizing the authorized spectrum resources of a primary system refers that the secondary systems utilize the authorized spectrum resources of the primary system without affecting the usage of spectrum resources of the primary system; if the affection of the usage of spectrum resources of the primary system by the secondary system on the primary system is out of the allowable range of the primary system, the secondary system is forbidden to use the spectrum resources.

Therefore, the premise under which the determination on whether the spectrum resource can be accessed and the spectrum resource available for communication is made for the new secondary system expecting to access the spectrum resource is the interference brought to the primary system by the access of the new secondary system is still within the allowable range of the primary system, that is, the spectrum resource usage of the primary system is not affected. Although not specifically mentioned in the following, the various embodiments described below in which the spectrum resource available for communication is determined for the new secondary system are all based on the premise.

Typically, the interference information of respective locations managed by the radio resource management system is affected not only by respective secondary systems managed by the radio resource management system, but also by the secondary systems managed by other adjacent radio resource management systems (especially, the secondary systems in the edge of the coverage range of the radio resource management system). Accordingly, according to the present disclosure, the obtaining device 10 obtains the interference information of respective locations managed by the radio resource management system 1 based on not only the location and the operating parameters of respective secondary systems managed by the radio resource management system 1 itself, but also the location and the operating parameters of respective secondary systems managed by its adjacent secondary system.

Typically, the radio resource management system manages the operating parameter information and the location information of respective primary systems and secondary systems within its management range. Therefore, according to an embodiment of the present disclosure, the obtaining device 10 of the radio resource management system 1 obtains the interference information of respective locations managed by the radio resource management system 1 based on the location information and the operating parameters of respective secondary systems managed by the radio resource management system 1 and obtained from the radio resource management system 1 and the location information and the operating parameters of respective secondary systems managed by respective adjacent radio resource management systems and obtained from the respective adjacent radio resource management systems.

According to one embodiment of the present disclosure, the operating parameters of the secondary systems managed by the radio resource management system includes, for example, the maximum transmission powers and operating channels of the secondary systems , the transmission signal wave forms and the modulation modes supported by the secondary systems, etc..

According to the present disclosure, the obtaining device 10 is configured to obtain the interference information of respective locations managed by the radio resource management system in different channels.

When the interference information regarding the interference of respective secondary systems on respective locations managed by the radio resource management system 1 is obtained with respect to the locations, it is usually assumed that there is a secondary system at the location, such that the interference information of the location is determined according to the interference information of the secondary system regarding the interference caused by other secondary systems in different channel at the location. According to an embodiment of the present disclosure, the radio resource management system 1 can calculate, based on the locations and the operating parameters of the secondary systems managed by the radio resource management system 1 and the secondary systems managed by the adjacent radio resource management systems, the interference information of respective locations managed by the radio resource management system 1 in different channel, such as the interference power I, for example, according to the following formula (1) (referring to: T.S. Rappaport, "Wireless Communications Principles and Practice", published by Prentice-Hall, Inc., 1996).

$$I = \sum_{0}^{n} P_l = \sum_{0}^{n} (P_t - PL) = \sum_{0}^{n} [P_t - (A * \log_{10}(d) + B * \log_{10}(f) + C) \quad (1)$$

wherein, $P_l$ represents the received interference power, $P_t$ represents the interference transmission power, $PL$ is the path loss power, $d$ is the distance between the location managed by the radio resource management system and other secondary systems, f is the transmission frequency of the secondary system at the location managed by the radio resource management system, $A, B,$ C are the parameters of the channel transmission model in different transmission environment, n is the number of the secondary systems that may generate interference on the location, including the secondary systems that are managed by the radio resource management system and the adjacent radio resource management systems and may generate interference on the location.

The radio resource management system 1 can also draw the interference distribution map according to the calculated interference information of respective locations in different channels.

Fig.2 illustrates an interference allocation map obtained by MATLAB simulation performed through the simulation parameters shown in table 1, wherein, the x axis and the y axis respectively represent the area in the horizontal and vertical directions of the range managed by the radio resource management system. 0~200m on the x axis corresponds to the distribution of the secondary systems in the adjacent radio resource management system, as shown, 10 locations of the secondary systems are randomly generated, 200m~400m corresponds to the distribution of respective locations managed by the radio resource management system, wherein, the unit of the interference value is dB.

TABLE 1: SIMULATION PARAMETERS FOR INTERFERENCE DISTRIBUTION MAP

| PARAMETERS | VALUE OF THE PARAMETERS | NOTES |
|---|---|---|
| Radius of the service area of the base station in the radio resource management system (m) | 100 | |
| Reception power of the secondary system in the radio resource management system 1 (dBm) | -55 | assuming that the reception powers of all secondary systems are identical |
| Transmission power of the secondary system in the adjacent radio resource management system (dBm) | 15 | assuming that the transmission powers of all secondary systems are identical |
| f (MHz) | 530 | |
| Modulation mode | 16 QAM | |
| Channel type | Gaussian white noise | |
| Band width (MHz) | 20 | |
| Channel model | Walfisch-Bertoni | |

It should be noted here that the interference distribution map shown in Fig.2 is an interference distribution map of the interference condition obtained in respective locations with respect to one channel. According to another example of the present disclosure, the interference distribution map can be drawn with respect to each of a plurality of channels, such that the channel with small interference can be selected as the operating channel of the secondary system supporting multiple channels. In the above description, the channel is taken as an example of transmission resource. It should be understood that, according to the disclosed content of the present invention, the interference distribution map can be drawn with respect to other transmission resource types, such as time-frequency resource block, and the time-frequency resource block with small interference can be selected as the transmission resource of the specific secondary system.

When there is a new secondary system expects to access spectrum resource in the management range of the radio resource management system 1, the determining device 20 determine, based on the location information of the new secondary system and the interference information of respective locations managed by the radio resource management system and obtained by the acquiring device 10, whether to accept request of the new secondary system and the spectrum resources available for communication of the new secondary system.

According to the present disclosure, the determining device 20 can determine an available channel with small interference for the new secondary system as the operating channel of the new secondary system, based on the location information of the new secondary system and the interference information of respective locations managed by the radio resource management system in different channels acquired by the acquiring device 10. For example, the determining device 20 can randomly select one available channel from respective available channels of which the interference is smaller than a predetermined threshold or select one available channel with least interference from respective channels as the operating channel of the new secondary system base on the interference information of the location of the new secondary system in different channels. In the case that the new secondary system has a specific requirement on the communication quality, for example, the requirement of the new secondary system for using the spectrum of the primary system includes a QoS requirement, the above predetermined threshold can be determined based on the QoS requirement. In other examples, the above predetermined threshold is determined based on the common communication quality requirement of the secondary system.

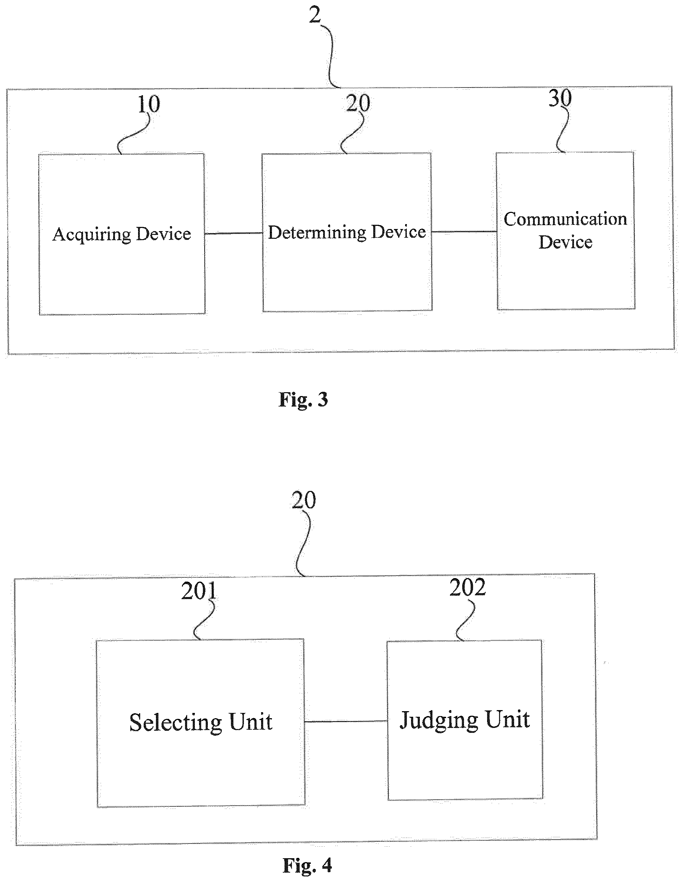

Fig.3 is another exemplary block diagram schematically illustrating a radio resource management system according to the present disclosure.

As shown in Fig.3, in addition to comprising the acquiring device 10 and the determining device 20 similar to the radio resource management apparatus 1 in Fig.1, the radio resource management apparatus 2 further comprises: a communication device 30, configured to receive the location information and the operating parameters of the secondary systems managed by the adjacent radio resource management system from the adjacent radio resource management system, and receive the request information requesting for spectrum resources from the new secondary system.

According to the present disclosure, the communication device 30 can receive the location information and the operating parameter information of the secondary systems managed by the adjacent radio resource management system from the adjacent radio resource management system, such that the acquiring device acquires the interference information of respective location managed by the radio resource management system 2 based on the above received information.

According to the present disclosure, the adjacent radio resource management systems can be configured to communicate the location information and the operating parameters of all registered secondary systems with each other. According to the present disclosure, the location information of the secondary system includes latitude, longitude and antenna height information; the operating parameters includes, for example, the maximum transmission power and the operating channel of the secondary system, the transmission signal wave forms and the modulation modes supported by the secondary system, etc..

The communication device 30 may also receive the request information requesting for spectrum resources from the new secondary system, such that the determining device can determine whether the spectrum resource can be provided to the new secondary system or not (that is, whether the request of the new secondary system for accessing the spectrum resource can be accept or not) based on the request information of the new secondary system and the interference information acquired by the acquiring device 10.

According to the present disclosure, the new secondary system requesting for accessing spectrum resource may need, for example, the quality of service (QoS) guarantee, that is, has the QoS requirement. In this case, the QoS requirement of the new secondary system has to be considered when the spectrum resources are allocated to the new secondary system.

According to an embodiment of the present disclosure, the QoS requirement can be determined according to the requirement of the new secondary system for at least one of the BER (also known as packet loss ratio), latency, data transmission rate, outage probability, channel capacity. According to the present disclosure, the QoS requirement of the new secondary system can be classified according to the service type of the new secondary system, such that the QoS requirement of the new secondary system can be determined according to the service type of the new secondary system. Table 2 illustrates the rank of the QoS requirement of different types of new secondary systems.

TABLE 2: DIFFERENT TYPES OF COGNITIVE USER SERVICE QoS RANK AND REQUIRMENT

| SERVICE TYPE OF THE NEW SECONDARY SYSTEM | QoS REQUIREMENT | INFORMATION INTERACTION INTERVAL REQUIREMENT |
|---|---|---|
| Voice Service | Having a higher requirement for latency, latency jitter, and outage probability, having a greater tolerance to packet loss ratio, capacity, etc. | the interaction interval is short according to the requirement of the system |

(continued)

| SERVICE TYPE OF THE NEW SECONDARY SYSTEM | QoS REQUIREMENT | INFORMATION INTERACTION INTERVAL REQUIREMENT |
|---|---|---|
| Video service | Having a higher requirement for latency jitter, outage probability, and capacity, having a greater tolerance to latency, packet loss ratio. | the interaction interval is short according to the requirement of the system |
| Data service | Having a higher requirement for packet loss ratio, having a greater tolerance to latency, outage probability, latency jitter, and capacity. | the interaction interval is long according to the requirement of the system |
| Background service | Having a higher requirement for packet loss ratio, having a greater tolerance to latency, outage probability, latency jitter, and capacity. | the interaction interval is long according to the requirement of the system |

According to the present disclosure, the operating parameter related information includes, for example, the maximum allowable transmission power, the supported transmission signal form, and the modulation mode. In addition, when the new secondary system is a new secondary system having a QoS requirement, the request information includes information related to the QoS requirement expected by the new secondary system. The information related to the expected QoS requirement includes, for example, at least one of BER, latency, data transmission rate, and service type. When the request information is received from the new secondary system, the radio resource management system 1 determines the QoS requirement of the new secondary system according to the related information included in the request information, for example, BER, latency, data transmission rate, and service type.

When the communication device 30 received the request information of the new secondary system requesting for accessing the spectrum resource, the determining device 20 can determine the operating channel for the new secondary system from an available channel with the best communication condition (ie., with the minimum interference) as by referring to the interference information of respective locations managed by the radio resource management system in different channels acquired by the acquiring device 10, and compare the acquired interference value of the new secondary system in the operating channel with a predefined minimum interference threshold (for example, 10dB), to judge whether can provide an effective guarantee to the QoS of the newly accessed secondary system, so as to access the new secondary system.

Fig.4 is a block diagram schematically illustrating a possible example structure of the determining device shown in Fig.1.

As shown in Fig.4, the determining device 20 comprises: a selecting unit 201, configured to determine the operating channel for the new secondary system from the available channel with the minimum interference according to the location information of the new secondary system; and a judging unit 202, configured to judge whether QoS requirement guarantee can be provided to the new secondary system based on the interference information of the location of the new secondary system in the operating channel, so as to judge whether to accept the request of the new secondary system.

The judging unit 202 judges whether can satisfy the QoS requirement of the new secondary system or not based on the interference information of the location of the new secondary system in the operating channel. For example, the interference value of the location of the new secondary system in the operating channel can be compared with a predefined interference threshold (for example, the threshold can be preset as 10dB). According to the present disclosure, the predefined interference threshold can be determined based on, for example, the QoS requirement of the new secondary system (for example, the minimum BER required by the communication of the new secondary system) and at least one of the related system parameters (such as the modulation mode, encoding scheme, signal bandwidth, receiver noise factor, etc.) adopted when the new secondary system communicates.

If the interference value of the location of the new secondary system in the operating channel acquired by the acquiring device 10 is greater than or equal to a predetermined interference threshold, the judging unit 202 can make a judgment that QoS requirement guarantee can be provided to the new secondary system, that is, the QoS requirement of the new secondary system cannot be satisfied, so as to deny the access of the new secondary system; otherwise, the judging unit 202 may make a judgment that QoS requirement guarantee can be provided to t the new secondary system, so as to accept the request for access of the new secondary system.

According to the present disclosure, the judging unit 202 can judge whether QoS requirement guarantee can be provided to the new secondary system or not based on the location and the operating parameter of the new secondary system, the expected interference information and the available duration of respective available channels, the expected QoS requirement of the new secondary system, so as to accept the request of the new secondary system. For example, when the duration for which the new secondary system expects to occupy the spectrum resource matches the available duration of the idle spectrum resource that the primary system managed by the radio resource management system 1 can provide and can satisfy the QoS requirement of the new secondary system, the judging unit 202 can judge that QoS requirement guarantee can be provided to the new secondary system.

According to the present disclosure, when the judging unit 202 judges that QoS requirement guarantee can be provided to the new secondary system, an indicator indicating "access allowed" can be sent by the communication device 30 to the adjacent radio resource management system and the new secondary system; when the judging unit 202 judges that QoS requirement guarantee cannot be provided to the new secondary system, an information indicating "access denied" can be sent by the communication device 30 to the new secondary system, such that the new secondary system may adjust the access request correspondingly according to the information indicating "access denied".

Furthermore, whether to accept the spectrum resource access request of the new secondary system can be determined by considering whether the use fee of radio resources that the new secondary system having request for accessing spectrum resource is willing to pay has profit with respect to the spectrum resources managed by the radio resource management system. For example, when the fee that the new secondary system is willing to pay for accessing the spectrum resources exceeds the fee paid by the existing secondary system for using the radio resources, even if it is determined that QoS requirement guarantee cannot be provided to the new secondary system according to the interference information of the new secondary system at its location, the QoS requirement of the new secondary system can be satisfied by adjusting or turning off the spectrum usage of the new secondary system having no requirement for QoS, so as to realize the profit maximization of operator.

According to the present disclosure, the request information received by the communication device 30 of the radio resource management system 1 from the new secondary system also includes information about the use fee of spectrum resources that the new secondary system is willing to pay. The judging unit 202 accordingly judges whether to accept the request of the new secondary system or not based on the information of use fee of spectrum resources that the new secondary system is willing to pay and the spectrum usage condition of other secondary systems. For example, in the case that the new secondary system is willing to pay more use fee for spectrum resources, even if the subjected interference of the new secondary system at its location is greater than the interference threshold, the judging unit 202 can judge that the request of the new secondary system is accepted.

In addition, in the case that the judging unit 202 judges that the request of the new secondary system cannot be accepted, the information indicating "access denied" sent by the communication device 30 to the new secondary system may include: the information indicating that the spectrum usage of other secondary systems can be adjusted with out profit; or the information indicating that the spectrum usage of other secondary systems cannot be adjusted currently. Therefore, the new secondary system can adjust the request for access according to the information indicating "access denied" received from the communication device 30 of the radio resource management system 1.

For example, if the information indicating "access denied" received by the new secondary system from the radio resource management system 1 indicates that the spectrum usage of other secondary systems can be adjusted without profit (for example, there is a secondary system having a priority of spectrum usage not higher than that of the new secondary system, among the secondary systems that are using spectrum resources), the new secondary system may launch a request for accessing the spectrum resource to the radio resource management system 1 again by increasing the use fee of spectrum resource it is willing to pay, that is, the new secondary system includes the increased use fee of spectrum resource in the request information, so as to try to access the spectrum resource again. For another example, if the information indicating "access denied" received by the new secondary system from the radio resource management system indicates that the spectrum usage of other secondary systems cannot be adjusted (for example, there is a secondary system having a priority of spectrum usage higher than or equal to that of the new secondary system, among the secondary systems that are using spectrum resources), the new secondary system can choose to try again to send the request information for accessing the spectrum resource later, or try again to access the spectrum resource by decreasing the QoS requirement of the new secondary system.

In the case that the judging unit 202 judges that QoS requirement guarantee can be provided to the new secondary system, but a certain adjustment/setting is needed to be performed on respective secondary systems to allow accessing the new secondary system, the QoS requirement of the new secondary system can be satisfied by adjusting the modulation mode of the new secondary system.

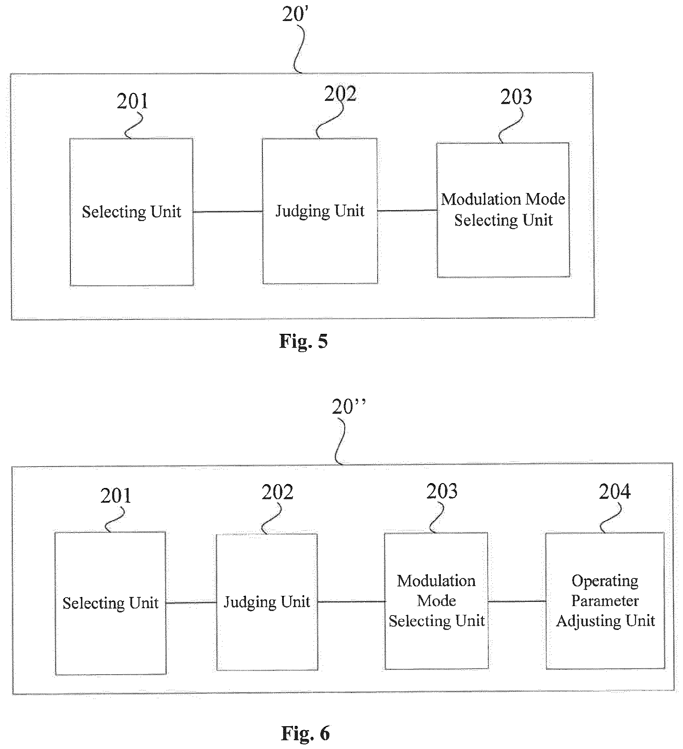

Fig.5 is a block diagram schematically illustrating a possible example structure of the determining device shown in Fig.1.

As shown in Fig.5, in addition to comprising a selecting unit 201 and a judging unit 202 similar to the determining device 20 in Fig.4, the determining device 20' further comprises: a modulation mode selecting unit 203, configured to select, in the case that the operating parameters indicates that a plurality of modulation modes are supported and the judging unit judges that QoS requirement guarantee can be provided to the new secondary system, the modulation mode of the new secondary system, so as to satisfy the QoS requirement of the new secondary system.

According to the present disclosure, if the operating parameters of the new secondary system indicates that the new secondary system supports a plurality of modulation modes, the modulation mode selecting unit 203 can select other modulation modes (for example, QPSK modulation mode) for the new secondary system to satisfy the QoS requirement of the new secondary system. For example, when 16QAM modulation mode is currently used by the new secondary system, if the QoS requirement of the new secondary system may be satisfied by simply changing the modulation mode of the new secondary system to, for example, QPSK modulation mode, the modulation mode selecting unit selects the QPSK modulation mode as the modulation mode of the new secondary system.

On the other hand, if the QoS requirement of the new secondary system cannot be satisfied by simply changing the modulation mode, or the new secondary system does not support a plurality of modulation modes, the QoS requirement of the new secondary system can be satisfied by adjusting the spectrum usage of other secondary systems, especially the secondary systems having a priority of spectrum usage lower than that of the new secondary system.

Fig.6 is another block diagram schematically illustrating a possible example structure of the determining device shown in Fig.1.

As shown in Fig.6, in addition to comprising a selecting unit 201, a judging unit 202 and a modulation mode selecting unit 203 similar to the determining device 20' in Fig.5, the determining device 20" further comprises: an operating parameter adjusting unit 204, configured to determine, configured to determine, in the case that the judging unit judges that QoS requirement guarantee can be provided to the new secondary system, the operating parameter adjustment of the secondary systems managed by its and adjacent radio resource management system when the new secondary system accesses the operating channel based on the interference information on the location of the new secondary system and the QoS requirement thereof, such that the new secondary system can access the radio resource management system in the case that the QoS requirement of the new secondary system is guaranteed.

According to the present disclosure, when it is determined to adjust the spectrum usage of other secondary systems to satisfy the QoS requirement of the new secondary system, the amount of interference needed to be reduced to satisfy the QoS requirement of the new secondary system is firstly calculated, then the amount of operating parameters of other secondary systems needed to be adjusted are determined based on the amount of interference needed to be reduced.

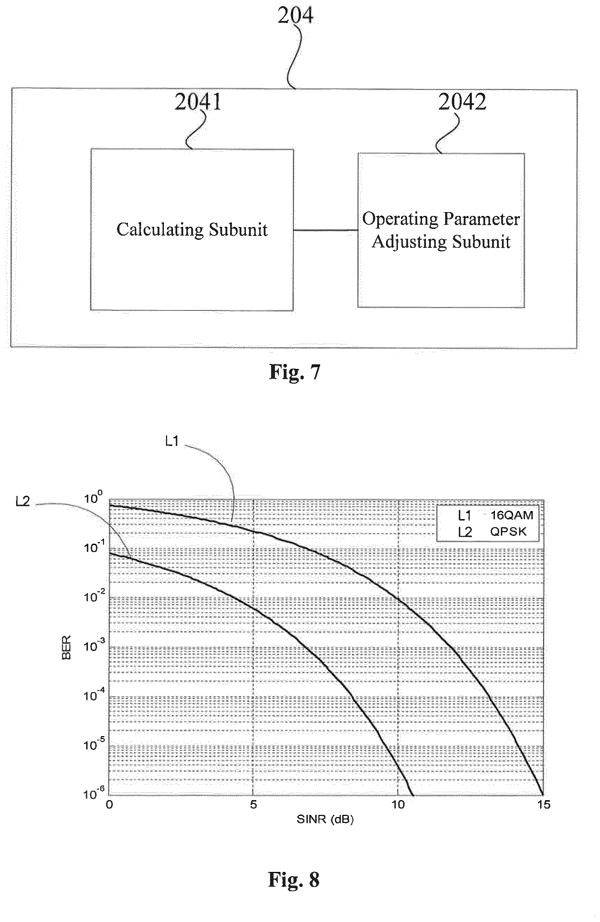

Fig.7 is a block diagram schematically illustrating a possible example structure of the operating parameter adjusting unit shown in Fig.6.

As shown in Fig.7, the operating parameter adjusting unit 204 comprises: a calculating sub-unit 2041, configured to determine, based on the interference information on the location of the new secondary system and the QoS requirement thereof, the interference value reduce demand for the new secondary system meets the QoS requirement according to the relationship between the interference information and the QoS requirement; and an operating parameter adjusting sub-unit 2042, configured to determine to the operating parameters adjustment of the secondary systems managed by its and adjacent radio resource management system, according to the interference value reduce demand, the QoS requirement of the secondary system and the interference value generated on the new secondary system.

Herein, the adjustment of the operating parameters of other secondary systems by the operating parameter adjusting unit 204 is illustrated by taking BER, the most important parameter in QoS parameters, as an example.

Typically, when the signal modulation mode is determined by one secondary system, the BER can be calculated from Signal to Interference plus Noise Ratio (SINR), such that the interference value needed to be reduced can be calculated according to BER needed to be adjusted.

Fig.8 is a graph showing the relationship between BER and SINR under 16QAM and QPSK modulation. Wherein, L1 represents the relationship between BER and SINR under 16QAM modulation mode, L2 represents the relationship between BER and SINR under QPSK modulation mode.

As shown in Fig.8, when the threshold of BER is determined, it is very easy to find out the threshold of SINR *threshold_SINR* according to the graph of the relationship between BER and SINR shown in Fig.8. For example, assuming the threshold of BER is 0.01, the thresholds of SINR under 16QAM modulation mode and QPSK modulation mode are 10dB and 5dB respectively according to Fig.8.

When the actual BER is less than the standard for guaranteeing the QoS, it is very easy to obtain the difference $\Delta\gamma$ between the actual SINR and the threshold of SINR from the relationship graph, such that the calculating sub-unit 2041 can inversely derive formula (3) from formula (2) for calculating SINR $\gamma$, so as to calculate the interference power value $\Delta I$ needed to be reduced:

$$\gamma = \frac{P_r}{I + \sigma^2} \qquad (2)$$

wherein, I is the interference power on the communication apparatus; $\sigma^2$ is the noise power, $P_r$ is the signal power received by the communication apparatus.

$$\Delta I = \frac{P_r}{\Delta \gamma} - \sigma^2 \qquad (3)$$

Based on the interference amount that is needed to be reduced to satisfy the QoS requirement of the new secondary system, the operating parameter adjusting sub-unit 2042 can firstly determine the adjustment to the operating parameters of other secondary systems managed by the radio resource management system 1, according to the QoS requirement of the secondary system managed by the radio resource management system 1 and the interference amount generated on the new secondary system.

More specifically, the operating parameter adjusting sub-unit 2042 can perform operating parameter adjustment to the secondary systems having no requirement for QoS and/or the secondary systems having QoS requirement less than that of the new secondary system, among the secondary systems managed by the radio resource management system 1. But the present disclosure is not limited thereto, those skilled in the art will appreciate that, when the new secondary system is willing to pay more use fee for spectrum resources to acquire the spectrum resources that satisfies the QoS requirement thereof (for example, when performing adjustment to the operating parameter, for example, the adjustment to the transmission powers of the secondary systems having QoS requirement less than that of the new secondary system is not enough to satisfy the QoS requirement of the new secondary system), the spectrum usage of the secondary system whose QoS requirement is identical to that of the new secondary system (the spectrum resource use fee paid by the secondary system may be less than the spectrum resource use fee that the new secondary system will pay) can also be adjusted.

In addition, when the adjustment to the spectrum resources of the secondary system managed by the radio resource management system 1 is not enough to satisfy the QoS requirement of the new secondary system, for example, when the radio resource management system 1 judges that the QoS requirement of the new secondary system cannot be satisfied after the operating parameters of other secondary systems managed by the radio resource management system 1 have been adjusted, it can determine to make adjustment to the operating parameters of the secondary systems having low QoS requirement and/or the secondary systems having QoS requirement less than that of the new secondary system, among the secondary systems managed by the adjacent radio resource management system according to the information of QoS requirement of respective secondary systems managed by the adjacent radio resource management system and acquired by the radio resource management system 1 from the adjacent radio resource management system.

According to an embodiment of the present disclosure, the interference on the new secondary system by the secondary systems having no requirement for QoS or having QoS requirement less than that of the new secondary system and managed by tits and adjacent radio resource management system and/or the adjacent radio resource management system can be calculated, the respective secondary systems can be sorted according to the generated interference, for example, starting with secondary system which generates the maximum interference on the new secondary system, and the transmission power of the secondary system can be adjusted. For example, the adjusted transmission power of the secondary system is calculated by the following formula (4) and (5):

$$I_1' = I_1 - \Delta I \qquad (4)$$

$$P_1' = L_1 + I_1' \qquad (5)$$

wherein, $I_1'$ is the interference power on the new secondary system generated by the secondary system after adjustment, $I_1$ is the interference power on the new secondary system generated by the secondary system before adjustment, $P_1'$ is the adjusted transmission power of the secondary system, $L_1$ is the path loss of the secondary system.

If the interference power $I_1$ on the new secondary system generated by the secondary system is less than $\Delta I$, the communication of the secondary system is interrupted, the secondary system having the second largest interference is adjusted, and the adjustment is performed in turn, until the interference amount of $\Delta I$ is ensured to decrease.

In the above description, to satisfy the QoS requirement of the new secondary system, the adjustment of the operating parameters of other secondary systems by the operating parameter adjusting unit 204 is illustrated by taking BER as an example. But the present disclosure is not limited thereto, the calculating sub-unit 2041 can calculate the interference power valueneeded to be adjusted according to the relationship between other QoS parameters (such as latency, data transmission rate, etc.) and SINR or the interference power, and the operating parameter adjusting sub-unit 2042 determines the values of operating parameters needed to be adjusted (for example, the transmission power) of other secondary systems according to a way similar to the way in describing BER above. In addition, those skilled in the art will appreciate that, the calculating sub-unit 2041 can perform weighted calculation on the relationships between each parameter of a plurality of QoS parameters (such as, BER, latency, data transmission rate) and the interference power, so as to calculate the interference power value of other secondary systems needed to be adjusted by combining a plurality of QoS parameters.

When operating parameter adjusting sub-unit 2041 determines the transmission power value needed to be adjusted of the radio resource management system and/or the adjacent radio resource management system, the communication device 30 sends the adjusted transmission powers to the secondary systems that are managed by the radio resource management system 1 and are determined to have the transmission power to be adjusted, such that the secondary systems communicate with the adjusted transmission power; and the communication device sends the adjusted transmission powers of the secondary systems managed by the adjacent radio resource management system to the adjacent radio resource management system, and the adjacent radio resource management system sends the adjusted transmission powers to the secondary systems having the transmission power to be adjusted, such that the secondary system communicates with the adjusted transmission power, so the affection on the new secondary system by the adjusted secondary systems is reduced to satisfy the QoS requirement of the new secondary system.

In addition, although the above embodiments illustrate that the determining device includes both the modulation mode selecting unit and the operating parameter adjusting unit respectively for performing adjustment of the modulation mode of the new secondary system and adjustment of operating parameters of other secondary systems to satisfy the expected requirement for QoS of the new secondary system, those skill in the art will appreciate that, the determining device according to the present disclosure can includes only the operating parameter adjusting unit, so as to satisfy the QoS requirement of the new secondary system by adjusting the operating parameter of other secondary systems.

Compared with the prior art, the radio resource management system according to embodiments of the present disclosure has at least one of the following advantageous effects: it is possible to determine to access the new secondary system requesting to access the spectrum resource according to the actual interference amount caused by the new secondary system, so as to realize quick and reliable access; it is possible to adjust the modulation mode of the new secondary system and the operating parameters of other secondary systems according to the actual interference amount on the new secondary system and the expected QoS requirement, so as to guarantee the QoS requirement of the new secondary system; relatively intact interference information can be acquired by interacting among different radio resource management systems before allocating spectrum resource to the new secondary system, and the interference in different locations can be determined by the interference information, such that the available resources can be quickly determined with respect to the new secondary systems in various locations.

The following is to describe the configuration of the adjacent radio resource management system in the case that the new secondary system within the management range of the radio resource management system 1 expects to access the spectrum resource.

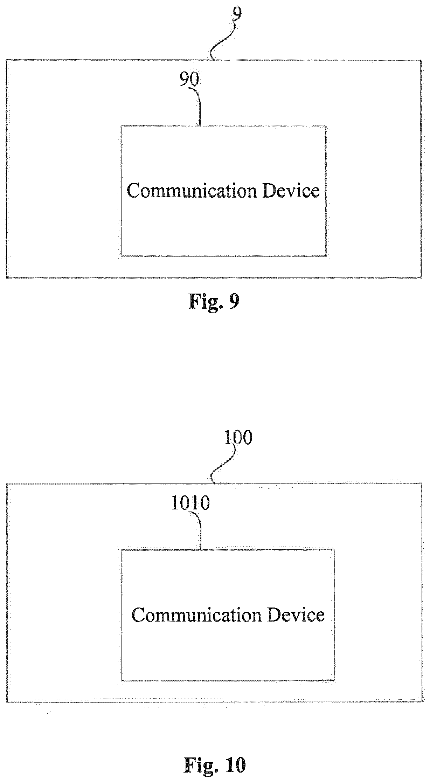

Fig. 9 is an exemplary block diagram illustrating a radio resource management system according to another embodiment of the present disclosure.

As shown in Fig.9, the radio resource management system 9 comprises: a communication device 90, configured to transmit the location information and the operating parameter of the secondary system managed by the radio resource management system to another adjacent radio resource management system, wherein, there is a new secondary system requesting for accessing spectrum resources within the management range of said another radio resource management system, wherein, said another radio resource management system determines whether to accept the request of the new secondary system and determine, if accept, the spectrum resources available for communication of the new secondary system, according to the interference information on respective locations managed by said another radio resource management system that is determined based on the location information and the operating parameters of the secondary systems transmitted by the communication device, wherein, the radio resource management system manages the secondary systems within its management range, such that the secondary systems opportunistically utilizes the authorized spectrum resources of a primary system under the premise that the interference of the secondary systems meets a predetermined condition to the primary system .

The primary system managed by the radio resource management system 9 according to the present disclosure may be a terrestrial television broadcasting system, and the secondary system may be a cognitive radio communication system.

Another radio resource management system according to embodiments of the present disclosure may be the radio resource management system 1 according to the first embodiment of the present disclosure.

According to embodiments of the present disclosure, the radio resource management system 9 can manage the operating parameter information and location information of the secondary system within the management range thereof, and can exchange the operating parameter information and location information of the managed secondary systems thereof with the adjacent radio resource management system through the communication device 90. When there is a new secondary system requesting for accessing spectrum resources in the management range of another radio resource management system, the another radio resource management system can determine the interference information of respective locations managed by the another radio resource management system (for example, the interference information may be a interference distribution map) based on the received location information and the operating parameter information of the secondary systems and the location information and the operating parameter information of the secondary system managed by the another radio resource management system, so as to determine whether to accept the request of the new secondary system and the spectrum resource available for communication of the new secondary system.

According to embodiments of the present disclosure, the new secondary system is the new secondary system having a requirement for Quality of Service (QoS), the request information sent by the new secondary system including geographic location information, operating parameter related information, and desired information related to the desired QoS requirement of the new secondary system.

According to embodiments of the present disclosure, the communication device 90 is further configured to receive the adjustment information transmitted from said another radio resource management system, so as to perform adjustment on the operating parameters of the secondary systems managed by the radio resource management system according to the adjustment information, such that the new secondary system access said another radio resource management system in the case that the QoS requirement of the new secondary system is satisfied.

According to embodiments of the present disclosure, the communication device 90 is further configured to transmit the adjustment response information to said another radio resource management system, such that said another radio resource management system performs detection on whether the QoS of the new secondary system achieves its desired QoS requirement.

The configuration of the secondary system requesting for accessing the spectrum resources in the management range of the radio resource management system 1 is described below.

Fig.10 is an exemplary block diagram illustrating a secondary system according to the present disclosure.

As shown in Fig.10, the secondary system 100 comprises a communication device 1010, configured to transmit spectrum resource access request information to the radio resource management system managing the secondary system, and receive from the radio resource management system the access request response information on whether to access the secondary system or not determined from the interference information on respective locations managed by the radio resource management system, wherein, the secondary system opportunistically utilizes the authorized spectrum resources of a primary system under the premise that the interference of the secondary system meets a predetermined condition to the primary system according to the control of the radio resource management system.

According to present disclosure, the secondary system 100 may be the secondary system having Quality of Service (QoS) requirement, the request information sent by the secondary system 100 to the radio resource management system includes geographic location information, operating parameter related information, and desired information related to the QoS requirement of the secondary system.

According to the present disclosure, the access request response information may include the information indicating "access denied", including: the information indicating that the spectrum use of other secondary systems can be adjusted without profit; or the information indicating that the spectrum use of other secondary systems cannot be adjusted currently. When the radio resource management system sends the access request response information indicating "access denied" to the secondary system because the QoS requirement of the secondary system cannot be satisfied, the secondary system 100 may correspondingly adjust the access request according to the type of the information indicating "access denied". For example, the secondary system 100 can adjust the spectrum resource use fee it is willing to pay according to the information indicating "access denied", so as to expect to obtain access license when requesting for access again.

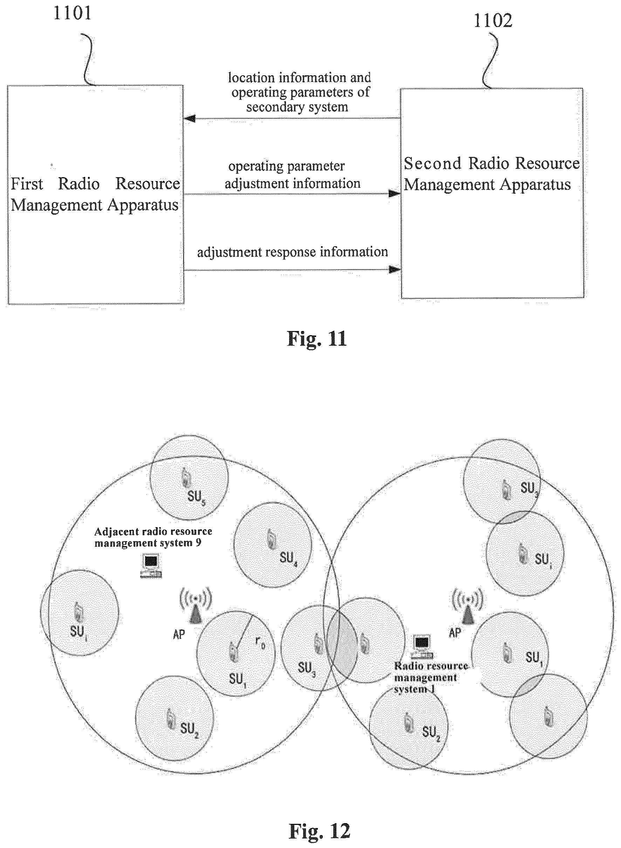

Fig.11 is a diagram illustrating the interaction between the radio resource management system and the adjacent radio resource management system according to the present disclosure.

As shown in Fig.11, the first radio resource management system 1101 receives from the second radio resource management system 1102 the location information and the operating parameters of the secondary system managed by the second radio resource management system 1102, and determines whether to accept the request for accessing spectrum resource of the new secondary system or not according to the location information of the new secondary system within the management range of the first radio resource management system 1101, and sends the operating parameters (such as the adjusted transmission power) of the secondary systems managed by the second radio resource management system 1102 to the second radio resource management system 1102, herein, the secondary system needed to adjust the operating parameters to satisfy the QoS requirement of the newly accessed secondary system is the secondary systems having no requirement for QoS or the secondary systems having a rank of the QoS requirement lower than that of the new secondary system; the second radio resource management system 1102 receives the adjusted operating parameters of the secondary systems managed by the second radio resource management system 1102 from the first radio resource management system 1101 and sends the operating parameters to the corresponding secondary systems, the respective secondary systems perform adjustment according to the adjusted operating parameters, such that the QoS requirement of the newly accessed secondary system is satisfied; in addition, after the secondary systems managed by the second radio resource management system 1102 perform adjustment according to the adjusted operating parameters, the second radio resource management system 1102 transmits to the first radio resource management system 1101 the adjustment response information indicating that the adjustment has been performed, such that the another radio resource management system detects whether the QoS requirement of the new secondary system achieves the expected QoS requirement.

Fig.12 is a diagram illustrating the interference between radio resource management systems and the interference region of respective secondary systems.

As shown in Fig.12, SS1 represents the range of primary system and secondary systems managed by the radio resource management system 1, SS2 represents the range of primary system and secondary systems managed by the radio resource management system 9 adjacent to the radio resource management system 1, in Fig.12, the shadow region covered by each secondary system within SS1 represents the interference region of the secondary system, the shadow region covered by each secondary system within SS2 represents the interference region of the secondary system. As shown, the location of the secondary system $SU_4$ managed by the radio resource management system 1 is only covered by the interference region of the secondary system $SU_3$ managed by the adjacent radio resource management system 9. Accordingly, it can be considered that only the secondary system $SU_3$ among the secondary systems managed by the adjacent radio resource management system 9 interferes with the location of the secondary system $SU_4$.

As shown in Fig.12, the communication device 30 of the radio resource management system 1 may receive the geographic location information and operating parameters of respective secondary systems from the adjacent radio resource management system, and the acquiring device 20 acquires the interference information of respective locations managed by the radio resource management system 1 based on the received geographic location information of respective secondary systems, such that the determining device 20 determines whether the access request of a new secondary system with a spectrum resource access request within the management range of the radio resource management system 1 can be accepted or not. Preferably, the adjacent radio resource management system may send the geographic location information and operating parameters of the secondary systems that have large affection on respective locations managed by the radio resource management system 1 to the radio resource management system 1. For example, when the secondary system $SU_4$ within the range managed by the radio resource management system 1 is the new secondary system requesting for spectrum resource, only the geographic location information and operating parameters of the secondary system $SU_3$ managed by the adjacent radio resource management system 9 may be sent to the radio resource management system 1.

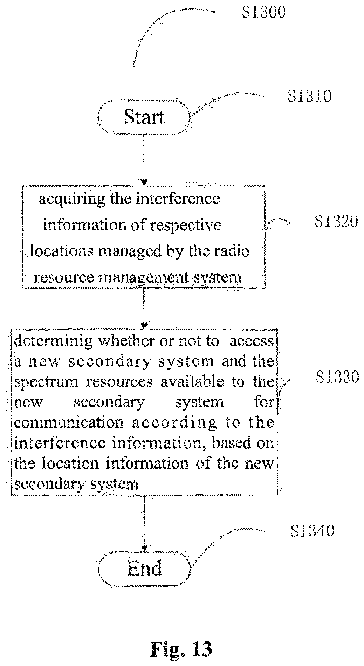

According to the present disclosure, there is also provided a radio resource management method. In the radio resource management method according to an embodiment of the present disclosure, the radio resource management system manages the secondary systems in the management range thereof, such that the secondary systems opportunistically utilize the authorized spectrum resources of a primary system under the premise that the interference of the secondary system meets a predetermined condition to the primary system. An exemplary process of the radio resource management method is described in conjunction with Fig.13.

As shown in Fig.13, in the radio resource management method according to an embodiment of the present disclosure, the process flow 1300 begins at S1310, then the process of S1320 is performed.

In S1320, the interference information of respective locations managed by the radio resource management system are acquired according to the location information and the operating parameters of the secondary systems managed by its and adjacent radio resource management system radio resource management systems. S1320 may also refer to the operation of the acquiring device 10 described in conjunction with Fig.1, the detailed description is omitted here. Then S1330 is performed.

In the transmission step S1330, whether to accept the request of a new secondary system and the spectrum resources available for communication of the new secondary system is determined according to the location information of the new secondary system that is within the management range of the radio resource management system and requests to access spectrum resources, based on the interference information acquired by the acquiring device. S1330 may also refer to the operation of the determining device 20 described in conjunction with Figs. 1-7, the detailed description is omitted here. Then S1340 is performed.

The process flow 1300 is ended at S1340.

In addition, according to the present disclosure, there is also provided a storage system, configured to store interference information within the management range of the first radio resource management system, the interference information is determined based on the location information and the operating parameters of the secondary systems managed by the first radio resource management system and its adjacent second radio resource management systems, the first radio resource management system manages the secondary system within its management range based on the data stored in the storage system, such that the secondary systems opportunistically utilize the authorized spectrum resources of a primary system under the premise that the interference of the secondary system meets a predetermined condition to the primary system . According to the present disclosure, the storage system may be a separate storage system independent of the first radio resource management system, or a storage system disposed in the first radio resource management system.

According to the present disclosure, the storage system is further configured to store the access parameters of respective secondary systems managed by the first radio resource management system, the access parameters includes: the fee for accessing spectrum resources, the maximum number of users supported by the secondary system, and the time taken by the secondary system to occupy radio resources after the secondary system accessed the radio resource management system. Accordingly, when the new secondary system with QoS requirement in the range managed by the first radio resource management system expects to access the spectrum resource, the first radio resource management system may determine whether to accept the request information of the new secondary system and the spectrum resource available for communication of the new secondary system based on the relationship between the access parameters of respective secondary systems acquired from the storage system and the QoS parameters contained in the request information of the new secondary system requesting for accessing the spectrum resource .

EXAMPLE OF APPLICATION SCENARIO

The radio resource management system according to the present disclosure is particularly applicable for the application scenario in which the primary system is a terrestrial television broadcasting system, and the secondary system is a cognitive radio communication system.

Respective component units, subunits in the above mentioned radio resource management apparatus according to embodiments of the present disclosure can be configured by way of software, firmware, hardware, or any of combinations thereof. In the case of software or firmware implementation, programs constituting the software or firmware are installed to a machine with a dedicated hardware structure from a storage medium or a network, wherein the machine may execute various corresponding functions of the component units, subunits when being installed various programs.

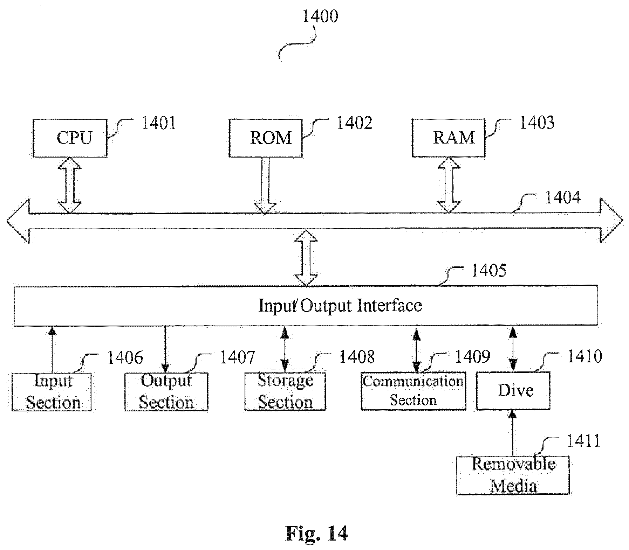

Figure 14 is a structure diagram illustrating a possible hardware configuration of an information processing apparatus for implementing the radio resource management system and the radio resource management method according to the present disclosure.

In Fig.14, a central processing unit (CPU) 1401 executes various processes according to programs stored in a read only memory (ROM) 1402 or programs loaded from the storage section 1408 to the random access memory (RAM) 1403. In RAM 1403, the data required when CPU 1101 executes various processes is stored as necessary. CPU1401, ROM 1402 and RAM 1403 are connected to each other via BUS 1404. Input/output interface 1405 is also connected to BUS 1404.

The following parts are also connected to the input/output interface 1405: an input section 1406 (including a keyboard, mouse, etc.), an output section 1407 (including a display, such as a cathode ray tube (CRT), liquid crystal display (LCD), etc. and a speaker, etc.), a storage section 1408 (including a hard disk, etc.), the communication section 1409 (including a network interface card such as a LAN card, modem, etc.). The communication section 1409 performs a communication process via a network such as Internet. If necessary, a drive 1410 can also be connected to the input/output interface 1405. Removable media 1411 such as a magnetic disk, an optical disk, a magneto-optical disk, a semiconductor memory or the like may be mounted on the drive 1410 as required, such that a computer program read out therefrom may be installed into the storage section 1408 as required.

In case of realizing the above mentioned series of processing by software, a program constituting the software is installed from a network such as Internet or from a storage medium such as the removable medium 1411.

Those skilled in the art should understand that, the storage medium is not limited to the removable storage medium 1411 shown in Fig.14 having programs stored therein and distributed separately from the apparatus to provide a program to a user. Examples of the removable storage medium 1411 include a magnetic disk (including a floppy disk), an optical disc (including a compact disc read-only memory (CD-ROM) and a digital versatile disk (DVD)), a magneto-optical disk (including a mini disk (MD) (Registration trademarks) and a semiconductor memory. Otherwise, the storage medium may be the ROM 1402, a hard disk contained in the storage section 1408, etc., which have programs stored therein and are distributed to users together with the apparatus including them.

Furthermore, the present disclosure provides a program product in which machine readable instruction codes are stored. The radio resource management system and the radio resource management method according to embodiments of the present disclosure can be executed when the instruction code is read and executed by the machine. Accordingly, various storage medium such as a magnetic disk, optical disk, magneto-optical disk, a semiconductor memory for carrying such a program product is also included in the present disclosure.

Finally, as should be further explained, such relational terms as left and right, first and second, etc., when used in the present disclosure, are merely used to differentiate one entity or operation from another entity or operation, without necessarily requiring or suggesting that these entities or operations have therebetween any such actual relation or sequence. Moreover, terms 'comprise', 'include' or any variants thereof are meant to cover nonexclusive inclusion, so that processes, methods, objects or devices that include a series of elements not only include these elements, but also include other elements not explicitly listed, or further include elements inherent in the processes, methods, objects or devices. Without more restrictions, an element defined by the sentence 'including a...' does not preclude the further inclusion of other identical elements in the processes, methods, objects or devices that include this element.

Although the present disclosure has been disclosed above by the description of specific embodiments of the present disclosure, it will be appreciated that those skilled in the art may design various modifications and improvements of the present disclosure within the scope of appended claims. Such modifications and improvements should also be regarded as being covered by the protection scope of the present disclosure as defined by the appended claims.

**Claims**

1. A radio resource management system (1), comprising:
   hardware configured to:

   receive spectrum resources request information from a new secondary system,
   acquire interference information of respective locations managed by the radio resource management system (1), based on location and operating parameter of secondary systems managed by an adjacent radio resource management system (9); and
   determine the spectrum resource for the new secondary system, based on the interference information acquired ,
   wherein the new secondary system is a new secondary system having Quality of Service, QoS, requirement,
   wherein the radio resource management system (1) is configured to manage the secondary systems within its management range, such that the secondary systems opportunistically utilize authorized spectrum resources of a primary system under the premise the interference of the secondary systems meets a predetermined interference condition to the primary system,
   wherein the request information includes geographic location information, operating parameter related information, and information related to the desired QoS requirement of the new secondary system.

2. The radio resource management system according to claim 1, wherein the hardware is further configured to: determine the spectrum resource for the new secondary system, based on the interference information and the location information acquired of the new secondary system.

3. The radio resource management system according to claim 1, wherein the hardware is further configured to receive the location information and operating parameters of other secondary systems from an adjacent radio resource management system, the other secondary systems managed by the adjacent radio resource management system.

4. The radio resource management system according to claim 1, wherein the QoS requirement is determined according to the request of the new secondary system for at least one of bit error rate, latency and data transmission rate, wherein the QoS requirement of the new secondary system is classified according to the service type of the new secondary system.

5. The radio resource management system according to claim 1, wherein

   the operating parameters include channel information, the hardware is configured to acquire the interference information of respective locations managed by the radio resource management system in different channels; and
   the hardware is configured to determine for the new secondary system the available channel with the minimum interference as the operating channel of the new secondary system, based on the location information of the new secondary system and the interference information of respective locations managed by the radio resource management system in different channels.

6. The radio resource management system according to claim 5, wherein the hardware is configured to:

   determine the operating channel for the new secondary system from the available channel with the minimum interference according to the location information of the new secondary system; and
   judge whether a QoS requirement guarantee can be provided to the new secondary system based on the interference information of the location of the new secondary system in the operating channel, so as to judge whether to accept the request of the new secondary system.

7. The radio resource management system according to claim 6, wherein the hardware is configured to judge whether QoS requirement guarantee can be provided to the new secondary system, based on the location and the operating parameters of the new secondary system, the expected interference information and the available duration of respective available channels, and the expected QoS requirement of the new secondary system, so as to accept the request of the new secondary system, wherein the hardware is further configured to send, in the case that it is judged that QoS requirement guarantee cannot be provided to the new secondary system, information indicating access denied to the new secondary system, such that the new secondary system correspondingly adjusts the access request according to the information indicating access denied.

8. A system comprising a radio resource management system and an adjacent radio resource management system, the radio resource management system comprising:

   a communication device (90), configured to transmit a location information and an operating parameter of a secondary system managed by the radio resource management system to said adjacent radio resource management system,
   wherein a new secondary system is configured to request for accessing spectrum resources within the management range of said adjacent radio resource management system,
   wherein the request includes geographic location information, operating parameter related information, and information related to a desired Quality of Service, QoS, requirement of the new secondary system,
   wherein said adjacent radio resource management system is configured to determine the spectrum resources available for the new secondary system, based on the interference information acquired, and
   wherein the radio resource management system is configured to manage the secondary system within its management range, such that the secondary system opportunistically utilizes the authorized spectrum resources of a primary system under the premise that the interference of the secondary system meets a predetermined interference condition to the primary system.

9. The system according to claim 8, wherein the communication device is further configured to receive an adjustment information transmitted from said adjacent radio resource management system, so as to perform adjustment on the operating parameters of the secondary systems managed by the radio resource management system according to the adjustment information, such that the new secondary system is configured to access said adjacent radio resource management system in the case that the QoS requirement of the new secondary system is satisfied.

10. The system according to claim 8, wherein the communication device is configured to transmit an adjustment response information to said adjacent radio resource management system, such that said adjacent radio resource management system is configured to perform detection on whether the QoS of the new secondary system achieves its desired QoS requirement.

**Patentansprüche**

1. Funkressourcenverwaltungssystem (1), das Folgendes beinhaltet:
   Hardware, die zu Folgendem konfiguriert ist:

   Empfangen von Spektrumsressourcen-Anfrageinformationen von einem neuen Sekundärsystem,
   Erlangen von Störungsinformationen jeweiliger Standorte, die von dem Funkressourcenverwaltungssystem (1) verwaltet werden, basierend auf Standorten und Betriebsparametern von Sekundärsystemen, die von einem benachbarten Funkressourcenverwaltungssystem (9) verwaltet werden; und
   Bestimmen der Spektrumsressource für das neue Sekundärsystem basierend auf den erlangten Störungsinformationen,
   wobei das neue Sekundärsystem ein neues Sekundärsystem ist, das eine Dienstgüte- bzw. QoS-Anforderung aufweist, wobei das Funkressourcenverwaltungssystem (1) dazu konfiguriert ist, die Sekundärsysteme innerhalb seiner Verwaltungsreichweite so zu verwalten, dass die Sekundärsysteme autorisierte Spektrumsressourcen eines Primärsystems opportunistisch nutzen, unter der Voraussetzung, dass die Störung des Sekundärsystems eine vorgegebene Störungsbedingung für das Primärsystem erfüllt,
   wobei die Anfrageinformationen geographische Standortinformationen, betriebsparameterbezogene Informationen und Informationen in Bezug auf die gewünschte QoS-Anforderung des neuen Sekundärsystems umfassen.

**2.** Funkressourcenverwaltungssystem nach Anspruch 1, wobei die Hardware ferner zu Folgendem konfiguriert ist: Bestimmen der Spektrumsressource für das neue Sekundärsystem basierend auf den Störungsinformationen und den Standortinformationen, die über das neue Sekundärsystem erlangt wurden.

**3.** Funkressourcenverwaltungssystem nach Anspruch 1, wobei die Hardware ferner dazu konfiguriert ist, die Standortinformationen und Betriebsparameter anderer Sekundärsysteme von einem benachbarten Funkressourcenverwaltungssystem zu empfangen, wobei die anderen Sekundärsysteme von dem benachbarten Funkressourcenverwaltungssystem verwaltet werden.

**4.** Funkressourcenverwaltungssystem nach Anspruch 1, wobei die QoS-Anforderung gemäß der Anfrage des neuen Sekundärsystems für mindestens eines von einer Bitfehlerrate, einer Latenz und einer Datenübertragungsrate bestimmt wird, wobei die QoS-Anforderung des neuen Sekundärsystems gemäß dem Diensttyp des neuen Sekundärsystems klassifiziert wird.

**5.** Funkressourcenverwaltungssystem nach Anspruch 1, wobei

die Betriebsparameter Kanalinformationen umfassen, die Hardware dazu konfiguriert ist, die Störungsinformationen jeweiliger Standorte, die von dem Funkressourcenverwaltungssystem in unterschiedlichen Kanälen verwaltet werden, zu erlangen; und
die Hardware dazu konfiguriert ist, für das neue Sekundärsystem den verfügbaren Kanal mit der minimalen Störung als den Betriebskanal des neuen Sekundärsystems zu bestimmen, basierend auf den Standortinformationen des neuen Sekundärsystems und den Störungsinformationen jeweiliger Standorte, die von dem Funkressourcenverwaltungssystem in unterschiedlichen Kanälen verwaltet werden.

**6.** Funkressourcenverwaltungssystem nach Anspruch 5, wobei die Hardware zu Folgendem konfiguriert ist:

Bestimmen des Betriebskanals für das neue Sekundärsystem anhand des verfügbaren Kanals mit der minimalen Störung gemäß den Standortinformationen des neuen Sekundärsystems; und
Beurteilen, basierend auf den Störungsinformationen des Standorts des neuen Sekundärsystems in dem Betriebskanal, ob dem neuen Sekundärsystem eine QoS-Anforderungsgarantie bereitgestellt werden kann, um zu beurteilen, ob die Anfrage des neuen Sekundärsystems akzeptiert werden soll.

**7.** Funkressourcenverwaltungssystem nach Anspruch 6, wobei die Hardware dazu konfiguriert ist, basierend auf dem Standort und den Betriebsparametern des neuen Sekundärsystems, den erwarteten Störungsinformationen und der verfügbaren Dauer jeweiliger verfügbarer Kanäle und der erwarteten QoS-Anforderung des neuen Sekundärsystems zu beurteilen, ob dem neuen Sekundärsystem die QoS-Anforderungsgarantie bereitgestellt werden kann, um die Anfrage des neuen Sekundärsystems zu akzeptieren, wobei die Hardware ferner dazu konfiguriert ist, in dem Fall, in dem beurteilt wird, dass die QoS-Anforderungsgarantie dem neuen Sekundärsystem nicht bereitgestellt werden kann, Informationen, die den verweigerten Zugriff angeben, an das neue Sekundärsystem zu senden, sodass das neue Sekundärsystem die Zugriffsanfrage gemäß den Informationen, die den verweigerten Zugriff angeben, entsprechend anpasst.

**8.** System, das ein Funkressourcenverwaltungssystem und ein benachbartes Funkressourcenverwaltungssystem beinhaltet, wobei das Funkressourcenverwaltungssystem Folgendes beinhaltet:

eine Kommunikationsvorrichtung (90), die dazu konfiguriert ist, eine Standortinformation und einen Betriebsparameter eines Sekundärsystems, das von dem Funkressourcenverwaltungssystem verwaltet wird, an das benachbarte Funkressourcenverwaltungssystem zu übertragen,
wobei ein neues Sekundärsystem dazu konfiguriert ist, eine Anfrage nach Zugriff auf Spektrumsressourcen innerhalb der Verwaltungsreichweite des benachbarten Funkressourcenverwaltungssytems zu stellen,
wobei die Anfrage geographische Standortinformationen, betriebsparameterbezogene Informationen und Informationen in Bezug auf eine gewünschte Dienstgüte- bzw. QoS-Anforderung des neuen Sekundärsystems umfasst, wobei das benachbarte Funkressourcenverwaltungssystem dazu konfiguriert ist, basierend auf den erlangten Störungsinformationen die Spektrumsressourcen zu bestimmen, die für das neue Sekundärsystem verfügbar sind, und
wobei das Funkressourcenverwaltungssystem dazu konfiguriert ist, das Sekundärsystem innerhalb seiner Verwaltungsreichweite so zu verwalten, dass das Sekundärsystem die autorisierten Spektrumsressourcen eines Primärsystems opportunistisch nutzt, unter der Voraussetzung, dass die Störung des Sekundärsystems eine vorgegebene Störungsbedingung für das Primärsystem erfüllt.

9. System nach Anspruch 8, wobei die Kommunikationsvorrichtung ferner dazu konfiguriert ist, eine Anpassungsinformation, die von dem benachbarten Funkressourcenverwaltungssystem übertragen wird, zu empfangen, um eine Anpassung der Betriebsparameter des Sekundärsystems, das von dem Funkressourcenverwaltungssystem verwaltet wird, gemäß der Anpassungsinformation durchzuführen, sodass das neue Sekundärsystem dazu konfiguriert ist, in dem Fall, in dem die QoS-Anforderung des neuen Sekundärsystems erfüllt ist, auf das benachbarte Funkressourcenverwaltungssystem zuzugreifen.

10. System nach Anspruch 8, wobei die Kommunikationsvorrichtung dazu konfiguriert ist, eine Anpassungsantwortinformation an das benachbarte Funkressourcenverwaltungssystem zu senden, sodass das benachbarte Funkressourcenverwaltungssystem dazu konfiguriert ist, eine Erkennung durchzuführen, ob die QoS des neuen Sekundärsystems ihre gewünschte QoS-Anforderung erreicht.

**Revendications**

1. Système de gestion de ressources radio (1) comprenant :
   du matériel configuré pour :

   recevoir des informations de requête de ressources en spectre en provenance d'un nouveau système secondaire,
   acquérir des informations d'interférences d'emplacements respectifs gérés par le système de gestion de ressources radio (1) sur la base de l'emplacement et d'un paramètre de fonctionnement de systèmes secondaires gérés par un système de gestion de ressources radio (9) adjacent, et
   déterminer les ressources en spectre pour le nouveau système secondaire sur la base des informations d'interférences acquises,
   dans lequel le système secondaire est un système secondaire comportant une exigence de qualité de service, QoS,
   dans lequel le système de gestion de ressources radio (1) est configuré pour gérer les systèmes secondaires dans sa plage de gestion de sorte à ce que les systèmes secondaires utilisent de façon opportuniste les ressources en spectre d'un système primaire sur le principe que les interférences des systèmes secondaires satisfont à une condition prédéterminée sur les interférences pour le système primaire,
   dans lequel les informations de requête incluent des informations d'emplacements géographiques, des informations se rapportant à des paramètres de fonctionnement et des informations se rapportant à l'exigence souhaitée de qualité QoS du nouveau système secondaire.

2. Système de gestion de ressources radio selon la revendication 1, dans lequel le matériel est en outre configuré pour déterminer la ressource en spectre pour le nouveau système secondaire sur la base des informations d'interférences et des informations d'emplacements acquises du nouveau système secondaire.

3. Système de gestion de ressources radio selon la revendication 1, dans lequel le matériel est en outre configuré pour recevoir les informations d'emplacements et les paramètres de fonctionnement d'autres systèmes secondaires à partir d'un système de gestion de ressources radio adjacent, les autres systèmes secondaires étant gérés par le système de gestion de ressources radio adjacent.

4. Système de gestion de ressources radio selon la revendication 1, dans lequel l'exigence en qualité QoS est déterminée en fonction de la requête du nouveau système secondaire pour au moins l'un parmi le taux d'erreur binaire, la latence et la vitesse de transmission de données, l'exigence en qualité QoS du nouveau système secondaire étend classé en fonction du type de service du nouveau système secondaire.

5. Système de gestion de ressources radio selon la revendication 1, dans lequel :

   les paramètres de fonctionnement incluent des informations de canal, le matériel étant configuré pour acquérir les informations d'interférences des emplacements respectifs gérés par le système de gestion de ressources radio dans différents canaux, et
   le matériel est configuré pour déterminer pour le nouveau système secondaire le canal disponible présentant l'interférence minimale en tant que canal d'exploitation du système secondaire, sur la base des informations d'emplacements du nouveau système secondaire et des informations d'interférences d'emplacements respectifs gérés par le système de gestion de ressources radio dans différents canaux.

**6.** Système de gestion de ressources radio selon la revendication 5, dans lequel le matériel est configuré pour :

déterminer le canal d'exploitation pour le nouveau système secondaire à partir du canal disponible présentant l'interférence minimale en fonction des informations d'emplacements du nouveau système secondaire, et évaluer si une garantie d'exigence en qualité QoS peut être fournie au nouveau système secondaire sur la base des informations d'interférences de l'emplacement du système secondaire dans le canal d'exploitation, de sorte à évaluer s'il faut accepter la requête du nouveau système secondaire.

**7.** Système de gestion de ressources radio selon la revendication 6, dans lequel le matériel est configuré pour évaluer si une garantie d'exigence en qualité QoS peut être fournie au nouveau système secondaire sur la base de l'emplacement et des paramètres de fonctionnement du nouveau système secondaire, des informations d'interférences attendues et de la durée disponible de canaux disponibles respectifs, et l'exigence attendue en qualité QoS du nouveau système secondaire de sorte à accepter la requête du nouveau système secondaire, le matériel étant en outre configuré pour envoyer, dans le cas où il est jugé que la garantie exigence en qualité QoS ne peut pas être fournie au nouveau système secondaire, des informations indiquant un rejet d'accès au nouveau système secondaire, de sorte à ce que le nouveau système secondaire ajuste en correspondance la requête d'accès en fonction des informations indiquant le rejet d'accès.

**8.** Système comprenant un système de gestion de ressources radio et un système de gestion de ressources radio adjacent, le système de gestion de ressources radio comprenant :

un dispositif de communication (90) configuré pour transmettre des informations d'emplacement et un paramètre de fonctionnement d'un système secondaire géré par le système de gestion de ressources radio pour ledit système de gestion de ressources radio adjacent,
dans lequel un nouveau système secondaire est configuré pour demander un accès à des ressources en spectre dans la plage de gestion dudit système de gestion de ressources radio adjacent,
dans lequel la requête inclut des informations d'emplacements géographiques, des informations se rapportant à des paramètres de fonctionnement et des informations se rapportant à une exigence souhaitée en qualité de service, QoS, du nouveau système secondaire,
dans lequel ledit système de gestion de ressources radio adjacent est configuré pour déterminer les ressources spectre disponibles pour le nouveau système secondaire sur la base des informations d'interférences acquises, et
dans lequel le système de gestion de ressources radio est configuré pour gérer le système secondaire dans sa plage de gestion de sorte à ce que le système secondaire utilise de façon opportuniste les ressources en spectre autorisées d'un système primaire sur le principe que les interférences système secondaires satisfont à une condition prédéterminée d'interférences pour le système primaire.

**9.** Système selon la revendication 8, dans lequel le dispositif de communication est en outre configuré pour recevoir des informations d'ajustement depuis ledit système de gestion de ressources radio adjacent de sorte à effectuer un ajustement sur les paramètres de fonctionnement des systèmes secondaires gérés par le système de gestion de ressources radio en fonction des informations d'ajustement, de sorte à ce que le nouveau système secondaire soit configuré pour accéder au dit système de gestion de ressources radio adjacent dans le cas où l'exigence en qualité QoS du nouveau système secondaire est satisfaite.

**10.** Système selon la revendication 8, dans lequel le dispositif de communication est configuré pour transmettre des informations de réponse d'ajustement au dit système de gestion de ressources radio adjacent de sorte à ce que ledit système de gestion de ressources radio adjacent soit configuré pour effectuer une détection de ce que la qualité QoS du nouveau système secondaire atteint son exigence souhaitée en qualité QoS.

**Fig. 1**

Fig.2

**Fig. 3**

**Fig. 4**

20'

201     202     203

| Selecting Unit | Judging Unit | Modulation Mode Selecting Unit |

**Fig. 5**

20''

201    202    203    204

| Selecting Unit | Judging Unit | Modulation Mode Selecting Unit | Operating Parameter Adjusting Unit |

**Fig. 6**

204

2041

2042

| Calculating Subunit | | Operating Parameter Adjusting Subunit |

**Fig. 7**

**Fig. 8**

Fig. 9

Fig. 10

1101               1102

```
┌─────────────────┐   location information and   ┌──────────────────┐
│                 │   operating parameters of    │                  │
│                 │◄──── secondary system ─────  │                  │
│                 │                              │                  │
│ First  Radio  Resource│  operating parameter   │ Second Radio Resource│
│ Management Apparatus  │──adjustment information──►│ Management Apparatus │
│                 │                              │                  │
│                 │── adjustment response information ──►│          │
│                 │                              │                  │
└─────────────────┘                              └──────────────────┘
```

**Fig. 11**

**Fig. 12**

S1300

Start — S1310

```
acquiring the interference
information of respective
locations managed by the radio
resource management system
```
S1320

```
determinig whether or not to access
a new secondary system and the
spectrum resources available to the
new      secondary      system      for
communication according to the
interference information, based on
the location information of the new
secondary system
```
S1330

End — S1340

**Fig. 13**

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130102350 A

**Non-patent literature cited in the description**

- **T.S. RAPPAPORT.** Wireless Communications Principles and Practice. Prentice-Hall, Inc, 1996